# EUROPÄISCHE PATENTSCHRIFT

(11) **EP 2 226 574 B1**
(45) Veröffentlichungstag und Bekanntmachung des Hinweises auf die Patenterteilung: **24.07.2019**
(21) Anmeldenummer: 10002358.9
(22) Anmeldetag: 08.03.2010
(51) Int. Cl.: F24D 19/10, F24H 9/02, F24H 9/06, F24H 9/14

(54) **Modulares Blockheizkraftwerk**
Modular combined heat and power plant
Centrale de chauffage en bloc modulaire

(30) Priorität: 06.03.2009 DE 102009011475
(43) Veröffentlichungstag der Anmeldung: 08.09.2010
(73) Patentinhaber: LichtBlick ZuhauseKraftwerk GmbH, 20359 Hamburg (DE)
(72) Erfinder: Appel, Christian, 25462 Rellingen (DE); Waninger, Henrik, 20529 Hamburg (DE); Roth, Harald, 55543 Bad Kreuznach (DE)
(74) Vertreter: Eisenführ Speiser

(56) Entgegenhaltungen:
- EP-A1- 1 607 586
- WO-A1-02/42712
- WO-A1-2008/039065
- DE-A1- 3 116 624
- FR-A1- 2 526 484
- US-A1- 2005 222 784
- US-B1- 6 250 080
- US-E- R E30 229

## Beschreibung

Die vorliegende Erfindung betrifft ein modulares Blockheizkraftwerk, insbesondere für Einfamilien- und Mehrfamilienhäuser. Das Blockheizkraftwerk (BHKW) ist gekennzeichnet durch eine erfindungsgemäße Modulbauweise, die es ermöglicht, ein BHKW insbesondere standardisiert zu fertigen und effizient zu integrieren, insbesondere zu transportieren, aufzubauen, anzuschließen und in Betrieb zu nehmen.

Als Blockheizkraftwerke werden kleinere motorisch betriebene Heizkraftwerke bezeichnet, deren Motoren in der Regel Verbrennungskraftmaschinen sind. Die während des Betriebs entstehende Abwärme der Motoren wird dabei über einen Wärmetauscher zu Heizzwecken verwendet, die mechanische Energie wird hingegen von einem Generator in elektrische Energie umgewandelt.

Blockheizkraftwerke dienen also in der Regel der gleichzeitigen Produktion von Wärme und elektrischer Energie. Dabei wird ein Brennstoff, beispielsweise Erdgas, Heizöl, Kohle, Biogas, Pflanzenöl, oder Biodiesel in einem Verbrennungsmotor umgewandelt in Wärme und mechanische Arbeit transformiert, die wiederum in einem Generator in elektrische Energie transformiert wird.

Blockheizkraftwerke sind insbesondere auch bekannt aus der DE 102005002831 A1 und der EP 1030123. Das BHKW der DE 102005002831 A1 sieht unter anderem eine Umschaltvorrichtung vor, die dazu dient, die erzeugte elektrische Energie in ein öffentliches Netz eines Energieversorgers einzuspeisen. Auch das europäische Patent EP 1030123 B1 hat ein BHKW zum Gegenstand. Bei diesem BHWK wird erfindungsgemäß die Wärme des Abgases über einen zweiten Wärmetauscher abgeführt und somit energetisch nutzbar gemacht.

FR 2 526 484 A1 offenbart einen modularen Generatorapparat für die kombinierte Erzeugung von elektrischer Energie und Wärme und eine Anlage, die eine Gruppe von modularen Erzeugungsgeräten dieser Art umfasst. Der modulare Generatorapparat umfasst einen flüssigkeitsgekühlten Verbrennungsmotor, eine Brennkraftmaschine, Mittel für die Rückgewinnung und Wiederverwendung von Wärmeenergie und optische oder akustische Signal- und Alarmeinrichtungen.

Die Blockheizkraftwerke des Standes der Technik werden meist direkt am geplanten Betriebstandort zusammengebaut, so dass lange Einbauzeiten in Kauf genommen werden müssen. Außerdem muss das aufstellende Personal eine hohe fachliche Kompetenz in vielerlei Hinsicht, insbesondere Fachkenntnisse des Heizungsbaus, im Bereich der Hydraulik, sowie Fachkenntnisse zum Anschluss an das Niederspannungsnetz besitzen, da BHKW in der Regel eine Vielzahl von Einzel-Komponenten und Peripheriegeräten aufweisen. Die BHKW, soweit sie komplett alternativ endmontiert sind, sind in der Regel sehr schwer, da alle Bauteile, insbesondere Motor, Generator, Pumpen, Wärmeübertrager und Schallschutzelemente, gleichzeitig transportiert werden müssen und gleichzeitig hohe Steifigkeitsanforderungen insbesondere an einen Grundrahmen notwendig sind. Zusätzlich weisen endmontierte BHKW eine lange und breite Bauweise auf, so dass ein aufwendiger und vor allem barrierefreier Transport und ein entsprechender Platzbedarf am Aufstellort notwendig sind. Oft werden für BHKW eigene Gebäude eingeplant, die nachträglich um das bereits positionierte BHKW errichtet werden.

Die aus dem Stand der Technik bekannten Vorrichtungen sind für eine effiziente Integration in bestehende Einfamilien- und/oder Mehrfamilienhäuser, insbesondere für den Einbau in Kellerräume, ungeeignet oder zumindest sehr aufwendig und unpraktisch. In der Regel besteht gerade bei Einfamilienhäusern ein nur sehr begrenzter Zugang zu den Kellerräumen, so dass sich große, schwere und bereits endmontierte BHKW nur sehr umständlich einbauen lassen. Alternativ müssen die BHKW direkt am Betriebstandort zusammengebaut werden.

Der vorliegenden Erfindung liegt die Aufgabe zugrunde, ein modulares Blockheizkraftwerk zu schaffen, dass besonders effizient, insbesondere mit einem geringeren Einbringungsaufwand und kurzen Aufbauzeiten, in Einzel- oder Mehrfamilienhäusern integriert werden kann und insbesondere leicht transportiert, eingebaut, angeschlossen und in Betrieb genommen werden kann.

Diese Aufgabe wird von einem erfindungsgemäßen modularen Blockheizkraftwerk mit den Merkmalen des Anspruchs 1 gelöst. Bevorzugte Ausgestaltungen der Erfindung sind in den Unteransprüchen angegeben.

Erfindungsgemäß ist ein modulares Blockheizkraftwerk (BHKW), die Bauteile aufweisend: einen Verbrennungsmotor, einen elektrischen Generator; eine Steuerungseinheit und mindestens einen Kühlkreislauf, gekennzeichnet durch einen modularen Aufbau des BHKW, das BHKW mit mindestens einem ersten Modul, einem zweiten Modul, einem dritten Modul und einem vierten Modul, wobei der Verbrennungsmotor und der Generator nur In dem ersten Modul enthalten sind, ein erster Abschnitt des mindestens einen Kühlkreislauf, insbesondere des Verbrennungsmotors und/oder des Generators, in dem zweiten Modul enthalten ist, die Steuerungseinheit für mindestens eines der Bauteile, insbesondere für den Verbrennungsmotor und/oder den Generator, nur in dem dritten Modul enthalten ist, Elemente einer Abgasanlage und ein zweiter Abschnitt des mindestens einen Kühlkreislauf, insbesondere der Abgasanlage, in dem vierten Modul enthalten sind, wobei der Standplatzbedarf des modularen BHKWs kleiner als 4 m² ist, die Module Kontaktflächen aufweisen, die Kontaktflächen Verbindungselemente aufweisen, die Bauteile mit den Verbindungselementen elektrisch und/oder hydraulisch verbindbar sind, die Module jeweils mindestens ein zu dem direkt benachbarten Modul komplementäres Verbindungselement aufweisen, die Verbindungselemente und die komplementären Verbindungselemente schnellverbindbar sind, und wobei die Verbindungselemente und die komplementären Verbindungselemente elektrische Steckverbinder für die Strom- oder Datenübertragung, und/oder Kupplungselemente für gasförmige oder fluide Medien umfassen.

Ein erstes Modul des modularen BHKW weist mindestens den und den Generator auf. In einem alternativen Beispiel kann das erste Modul auch eine Vielzahl von Verbrennungsmotoren und/oder Generatoren aufweisen. In einem weiteren alternativen Beispiel liegt der Verbrennungsmotor im dem ersten Modul vor, und der Generator kann in einem anderen, insbesondere weiteren, Modul vorliegen. Insbesondere kann der Generator auch in einem der anderen Module vorliegen. Vorzugsweise kann der Generator aber auch in einem fünften Modul vorliegen. Ausführungen, in denen der Verbrennungsmotor und/ oder der Generator nicht im ersten Modul angeordnet sind, fallen jedoch nicht unter den Schutzbereich der Ansprüche. Der Verbrennungsmotor kann vorzugsweise mit Erdgas betrieben werden, aber auch alternative Kraftstoffe wie Heizöl, Kohle, Biogas, Pflanzenöl oder Biodiesel sind denkbar. Der Generator kann insbesondere eine elektrische Leistung von bis zu 100 kW, vorzugsweise zwischen 10 und 50 kW, besonders bevorzugt zwischen 15 und 30 kW, generieren. Des Weiteren kann der Generator einen Kühlkreislauf aufweisen, insbesondere einen Kühlkreislauf, der mit dem Kühlkreislauf des Verbrennungsmotors verbindbar ist, vorzugsweise einen gemeinsamen Kühlkreislauf zusammen mit dem Verbrennungsmotor. In einer bevorzugten Ausgestaltung der Erfindung kann der Generator der Anlasser des Verbrennungsmotors sein.

Ein zweites Modul des BHKW weist den mindestens einen Kühlkreislauf auf, insbesondere für mindestens ein Bauteil, vorzugsweise für den Verbrennungsmotor und/oder den Generator. Der Kühlkreislauf des erfindungsgemäßen BHKW kann über Mittel verfügen, die die Wärme des BHKW, insbesondere die Wärme des Verbrennungsmotors und/oder des Generators, übertragen können, insbesondere auf ein gasförmiges oder ein fluides Medium, insbesondere Wasser, Öl oder Kühlflüssigkeit. Erfindungsgemäß kann der erfindungsgemäße Kühlkreislauf eine Wärmepumpe und/oder einen Wärmetauscher, vorzugsweise einen Plattenwärmeübertrager und/oder einen Spiralwärmeübertrager und/oder einen Rohrwärmeübertrager, insbesondere einen Rohrbündelwärmeübertrager, aufweisen.

Ein drittes Modul des BHKW weist mindestens eine Steuereinheit für mindestens ein Bauteil, vorzugsweise für einen Verbrennungsmotor und/oder einen Generator, auf. Vorzugsweise kann die Steuerung so angepasst sein, dass insbesondere das gesamte BHKW und/oder eine, insbesondere an das BHKW angeschlossene, Heizungsanlage gesteuert werden kann.

Der Kühlkreislauf, insbesondere der der Abgasanlage, kann über Wärmeübertrager verfugen, die die Wärme des BHKW, insbesondere die Wärme des Abgases des Verbrennungsmotors, übertragen können, insbesondere auf ein gasförmiges oder ein fluides Medium, insbesondere Wasser, Öl, Luft, Kühlflüssigkeit oder andere Flüssigkeiten. Erfindungsgemäß kann ein erfindungsgemäßer Kühlkreislauf eine Wärmepumpe und/oder einen Wärmetauscher, vorzugsweise einen Plattenwärmeübertrager und/oder einen Spiralwärmeübertrager und/oder einen Rohrwärmeübertrager, aufweisen.

Des Weiteren kann das vierte Modul mindestens einen Öltank und/oder eine Ölreservoirerweiterung zur Verbrennungsmotorkühlung aufweisen, der insbesondere mit Verbindungselementen mit dem Verbrennungsmotor verbindbar ist. Auch kann das vierte Modul mindestens einen Abgasstutzen aufweisen. Ein solcher Abgasstutzen kann insbesondere so angepasst sein, dass die Abgase des Verbrennungsmotors, insbesondere nachdem diese Wärme abgegeben haben, und zwar insbesondere an einen Kühlkreislauf, vorzugsweise an einen Brennwerttechnikübertrager, über einen Kamin entweichen können.

Erfindungsgemäß ist auch die Modulbauweise eines BHKW. Der modulare Aufbau des BHKW weist mindestens auf: den Verbrennungsmotor und den Generator in einem ersten Modul, ein zweites Modul mit dem mindestens einen Kühlkreislauf, insbesondere des Verbrennungsmotors und/oder des Generators, eine Steuerungseinheit für mindestens eines der Bauteile, insbesondere für den Verbrennungsmotor und/oder den Generator, in einem dritten Modul, ein viertes Modul mit Elementen einer Abgasanlage und dem mindestens einen Kühlkreislauf, insbesondere der Abgasanlage, und Verbindungselemente mit denen die Bauteile, insbesondere Bauteile unterschiedlicher Module, elektrisch und/oder hydraulisch verbindbar sind.

Dabei werden insbesondere vorgefertigte Module eines BHKW durch einfache Schnellverbindungselemente, vorzugsweise direkt am Betriebstandort miteinander schnellverbindbar. Mit den Verbindungselementen sind die Bauteile und/oder die Module miteinander verbindbar. Die Verbindungselemente sind schnellverbindbar, insbesondere ineinander steckbar und/oder verschraubbar, sein. Des Weiteren können die Verbindungselemente Steckverbinder, insbesondere elektrische Steckverbinder für die Strom- und/oder Datenübertragung, und/oder Kupplungselemente, insbesondere für gasförmige oder fluide Medien, vorzugsweise Schnellverschlusskupplungselemente, sein. Weitere Kupplungselemente können sein: Pneumatikkupplungen und/oder Hydraulikkupplungen. Auch können die Kupplungselemente Monokupplungen oder Multikupplungen sein und/oder zusätzliche Stopp-Vorrichtungen, insbesondere sogenannte Clean-Break-Kupplungen, aufweisen.

Dabei sind die Verbindungselemente, insbesondere die Steckverbinder, so ausgestaltet, dass eine Verbindung, insbesondere eine Datenverbindung und/oder eine elektrische Verbindung, zwischen den einzelnen Bauteilen und/oder Modulen entsteht. In einer alternativen Ausführungsform können die Verbindungselemente Sicherungselemente aufweisen, insbesondere mechanische Sicherungen, vorzugsweise kraftschlüssige und/oder formschlüssige und/oder stoffschlüssige Sicherungen, insbesondere auch Schraubsicherungen, und/oder elektrische Sicherungen. Auch können Verbindungselemente zusätzliche Dichtungs- und/oder Isolationselemente, insbesondere gegen Feuchtigkeit und/oder Staub und/oder Elektrizität, aufweisen.

Alternativ können die erfindungsgemäßen Verbindungselemente aber auch flexibel gestaltet sein, vorzugsweise durch die Verwendung von Verlängerungselementen, insbesondere durch die Verwendung von Kabeln und/oder Schläuchen, insbesondere Panzerschläuchen und/oder verstärkten Kunststoffschläuchen.

Erfindungsgemäß können die Module aneinander oder übereinander gelagert oder angeordnet sein. Die erfindungsgemäßen Module können Rahmenstrukturen, insbesondere Gitterrohrrahmen, oder andere stabilisierende Mittel aufweisen. Besonders vorzugsweise können die Module Kontaktflächen, insbesondere Aufstellflächen, aufweisen, die so ausgestaltet sind, dass der Kontakt zwischen zwei Modulen eine Verbindung, vorzugsweise eine formschlüssige und/oder kraftschlüssige Verbindung, aufweist. Vorzugsweise können die Kontaktflächen zwischen den Modulen so ausgestaltet sein, dass die Module ineinander fassen. In einer besonders bevorzugten Ausführungsform können die Kontaktflächen die Verbindungselemente, insbesondere Steckverbinder und/oder Kupplungselemente, aufweisen, insbesondere können die Kontaktflächen Multikupplungen und/oder elektrische Steckverbinder aufweisen. Die Module sind so gestaltet, dass sie jeweils mindestens ein zu dem direkt benachbarten Anschlussmodul komplementäres Verbindungselement aufweisen. In einer bevorzugten Ausführungsform können die erfindungsgemäßen Module Aufstellprofile, insbesondere Standfüße und/oder Lagerungsschienen, aufweisen. Die Aufstellprofile können insbesondere zur Vibrationsentkopplung zwischen den einzelnen Modulen und/oder der Gesamtanlage dienen. Auch eine Schwingungsentkopplende Auflage, insbesondere eine Bodenauflage, kann eine Schwingungsentkopplung, insbesondere zwischen den Modulen und/oder insbesondere zwischen dem vierten Modul und der Bodenfläche, bewirken.

Besonders vorteilhaft können die jeweiligen Module, insbesondere schon im Herstellungsbetrieb, vorgefertigt sein. Vorzugsweise können die jeweiligen Module, insbesondere unterschiedlicher BHKW, im Wesentlichen gleich oder gleichartig zusammengesetzt sein und/oder die gleichen Bauteile aufweisen. Besonders vorteilhaft ist eine werksseitige standardisierte Bauweise der jeweiligen Module. Vorzugsweise sind die Module so konstruiert, dass alle wesentlichen Bauteile, insbesondere ein Verbrennungsmotor und ein elektrischer Generator, und mindestens ein Kühlkreislauf in mindestens einem der Module enthalten ist. Des Weiteren kann eine zentrale Steuerungseinheit, insbesondere für den Verbrennungsmotor und/oder den Generator, Anzeige- und Bedienelemente sowie mindestens ein Zähler für die zu übertragende Energie, insbesondere für die elektrische Energie und/oder die Wärmeenergie, und mindestens eine Messeinrichtung in mindestens einem der Module, vorzugsweise in genau einem Modul, besonders vorzugsweise nur in dem erfindungsgemäßen dritten Modul, sein. Die Gesamtheit der Module eines erfindungsgemäßen modularen BHKW weist mindestens einen Verbrennungsmotor, mindestens einen elektrischen Generator und mindestens einen Kühlkreislauf auf. Auch kann eines der Module, insbesondere das erste oder das dritte Modul, einen Spannungsumwandler aufweisen.

Die erfindungsgemäßen Module des modularen BHKW können so ausgestaltet sein, dass ein Modul, insbesondere jedes Modul, nicht schwerer als 300 kg, insbesondere nicht schwerer als 200 kg, vorzugsweise nicht schwerer als 180 kg, ist und dass der Standplatzbedarf des modularen BHKW, insbesondere exklusive einer eventuell zusätzlichen Wartungsfläche gemessen, kleiner als 4 m², insbesondere kleiner als 2 m², vorzugsweise kleiner als 1 m² ist. Vorzugsweise können die erfindungsgemäßen Module so angeordnet werden, dass die Module übereinander positioniert und/oder ineinanderfassend ein gemeinsames BHKW-Aggregat bilden können. Vorzugsweise können die Schnittstellen des BHKW-Aggregats derart angepasst sein, dass die Module nicht schwerer als ein vorgegebenes Gewicht, insbesondere nicht schwerer als 200 kg und/oder die Grundfläche nicht größer als ein vorgegebene Fläche, insbesondere nicht größer als 2 m², vorzugsweise kleiner als 1 m² sind. Des Weiteren können die Schnittstellen des BHKW-Aggregats so ausgebildet sein, dass komplementäre Verbindungselemente sich im Wesentlichen gegenüberliegen und ineinander fassen und/oder durch Verlängerungselemente schnellverbindbar sind. Dies bewirkt vorteilhaft, dass die Module, insbesondere auf eine standardisierte Weise, aneinander angeschlossen werden können. Insbesondere bewirkt eine solche erfindungsgemäße Ausgestaltung vorteilhaft, dass der Einbringungsaufwand und die Einbauzeit reduziert werden kann.

Vorteilhaft an dem erfindungsgemäßen modularen BHKW-System kann es sein, dass die Module der gleichen Art, insbesondere aber auch mit alternativen Bauteilen der gleichen Art, insbesondere mit alternativen Motoren, oder mit alternativen Generatoren, austauschbar gestaltet sind. So kann ein Modul durch ein anderes Modul der gleichen Art, insbesondere ein erstes Modul durch ein gleiches oder alternatives erstes Modul und/oder ein drittes Modul durch ein gleiches oder alternatives Modul, austauschbar sein. Alternativ können auch zusätzliche Module zu einem erfindungsgemäßen modularen BHKW ergänzt werden.

Erfindungsgemäß kann das modulares BHKW eine Vielzahl von gleichen Bauteilen, insbesondere Verbrennungsmotoren und/oder Generatoren aufweisen. In einer alternativen Ausführungsform kann das erfindungsgemäße BHKW auch eine Vielzahl gleicher Module, insbesondere von ersten Modulen (den Verbrennungsmotor und/oder den Generator aufweisend) und/oder zweiten Modulen (mindestens einen Kühlkreislauf aufweisend) aufweisen. Auch kann es in einer alternativen Ausführungsform besonderes vorteilhaft sein, dass ein Modul im Wesentlichen alle Bauteile, insbesondere auch alle Peripherie-Elemente, aufweist. Eine solche Ausgestaltung fällt jedoch nicht unter den Schutzbereich der Ansprüche. Die Integration der Peripherie-Elemente in ein erfindungsgemäßes BHKW kann besonders vorteilhaft sein. Dies bewirkt besonderes vorteilhaft, dass der Einbringungsaufwand und die Aufstellzeiten reduziert werden kann und/oder der Aufbau der Anlage im Wesentlichen standardisiert werden kann. Die Integration von bisherigen Peripherie-Bauteilen und/oder Komponenten, die bei BHKW des Standes der Technik bislang meist außerhalb des BHKW-Aggregats angebracht wurden, insbesondere von einem Wärmemengenzähler, einer Steuerung für das BHKW und/oder das gesamtes Heizungssystem, insbesondere auch einer Heizungssteuerung für mehrere optionale Heizkreise, einer Elektroverteilung, einer Kommunikationseinheit, einer Mischergruppe für einen Heizkreis, insbesondere auch einer Mischergruppe für das Trinkwarmwasser bzw. zur vorrangigen Bedienung der Trinkwarmwasser-Bereitung, einer Speicherladepumpe, einer Schaltung zur Motorvorwärmung durch Heizungswasser und/oder einem abrechnungsrelevanten Stromzähler und/oder einer Einrichtung zur Netzüberwachung mit zugeordneten Schaltorganen (ENS), ermöglicht eine insbesondere standardisierte, vorzugsweise werksmäßige, Fertigung eines BHKW.

Eine weitere Aufgabe des modularen BHKW kann es sein, eine vorteilhafte Verschiebung des Einbindungsaufwandes in das Werk des Herstellers herbeizuführen, und so insbesondere die Einbringungszeiten am Betriebsstandort zu reduzieren und/oder die Einbringung des BHKW besonders effizient zu gestalten. Insbesondere kann dies durch die Integration möglichst vieler bisheriger Peripherie-Bauteile erreicht werden. Auch kann es eine Aufgabe sein, eine, insbesondere werksmäßige, Standardisierung, vorzugsweise auch Automatisierung, der Fertigung von BHKW zu ermöglichen. Eine solche standardisierte, vorzugsweise werksmäßige, Fertigung der Module ist besonders vorteilhaft, da insbesondere auch der Installationsaufwand am Betriebsstandort (Aufstellort) reduziert werden kann. Ein besonderer Vorteil des erfindungsgemäßen modularen BHKW kann es sein, dass der individuelle Aufwand für die Installation am Aufstellort reduziert werden kann. Gerade die ständig neuen Bedingungen am Aufstellort, sind häufig die Ursache für hohe Einbringungskosten bei herkömmlichen BHKW des Standes der Technik.

In einer besonders bevorzugten Ausführungsform können insbesondere die meisten der bisherigen Peripherie-Bauteile, vorzugsweise alle bisherigen Peripherie-Bauteile, in das modulare BHKW integriert sein. Insbesondere kann auch ein abrechnungsrelevanter Stromzähler in das BHKW integriert sein.

Weiterhin ermöglicht die besonders vorteilhafte Reduzierung des Einbindungsaufwandes, insbesondere durch die vormontierten Module und/oder ehemals zur Peripherie gehöriger Komponenten, eine Kalkulationssicherheit für den Einbringungsaufwand und/oder für die Investitionskosten.

In einer bevorzugten Ausführungsform können die folgenden Komponenten, die sich bei BHKW des Standes der Technik zumeist außerhalb des BHKW befinden, im modularen BHKW zumindest teilweise, vorzugsweise vollständig, integriert sein: ein Wärmemengenzähler, eine Steuerung für BHKW und/oder für das gesamte Heizungssystem, insbesondere auch eine Heizungssteuerung für mehrere optionale Heizkreise, eine Elektroverteilung, eine Kommunikationseinheit, eine Mischergruppe für einen Heizkreis, insbesondere auch eine Mischergruppe für das Trinkwarmwasser beziehungsweise zur vorrangigen Bedienung der Trinkwarmwasser-Bereitung, eine Speicherladepumpe, eine Schaltung zur Motorvorwärmung durch Heizungswasser, eine Einrichtung zur Netzüberwachung mit zugeordneten Schaltorganen (ENS), ein abrechnungsrelevanter Stromzähler.

Es gibt auch ein Verfahren zum Aufbau eines BHKW, insbesondere unter Verwendung der erfindungsgemäßen Module. Bei dem Verfahren sind die Bauteile und/oder die Module durch im Wesentlichen gegenüberliegende, komplementäre Verbindungselemente, insbesondere Schnellverbindungselementen, verbindbar, insbesondere ineinander steckbar und/oder verschraubbar. Bei einer vorteilhaften Ausgestaltung des Verfahrens können die Module jeweils vorgefertigt sein. Vorzugsweise werden für den Aufbau am Betriebsstandort lediglich die Verbindungselemente der Module miteinander verbunden. Bei einer besonders vorteilhaften Ausgestaltung des Verfahrens können die Module übereinander positioniert werden und/oder ineinander fassen und ein gemeinsames Aggregat bilden.

Eine weitere Aufgabe der vorliegenden Erfindung ist es, insbesondere standardisierte, BHKW- Module zu schaffen. Durch die erfindungsgemäße Ausgestaltung der Module und durch modulare Bauweise kann es besonders vorteilhaft sein, dass auch der Aufbau eines modularen BHKW zumindest teilweise standardisiert werden kann und/oder besonders effizient gestaltet werden kann. Eine vorteilhafte standardisierte Einbindung des BHKW und/oder ein standardisierter Aufbau des BHKW kann durch flexible Schlauchleitungen, insbesondere Panzerschlauchleitungen, vorzugsweise für die Hydraulikleitungen und/oder auch die Gasleitung, und/oder durch standardisierte Rohrleitungen, vorzugsweise flexible Rohrleitungen und/oder durch die Verwendung von Adaptern erreicht werden.

Diese und weitere Vorteile der Erfindung werden mit Bezug auf die beigefügten Zeichnungen von Ausführungsbeispielen der vorliegenden Erfindung weiter beschrieben.

In den Zeichnungen zeigen
- **Figur 1a**: ein Schema des modularen Aufbaus des BHKW,
- **Figur 1b**: eine schematische Gliederung eine modularen BHKW,
- **Figur 2a**: einen modularen Aufbau eines erfindungsgemäßen BHKW,

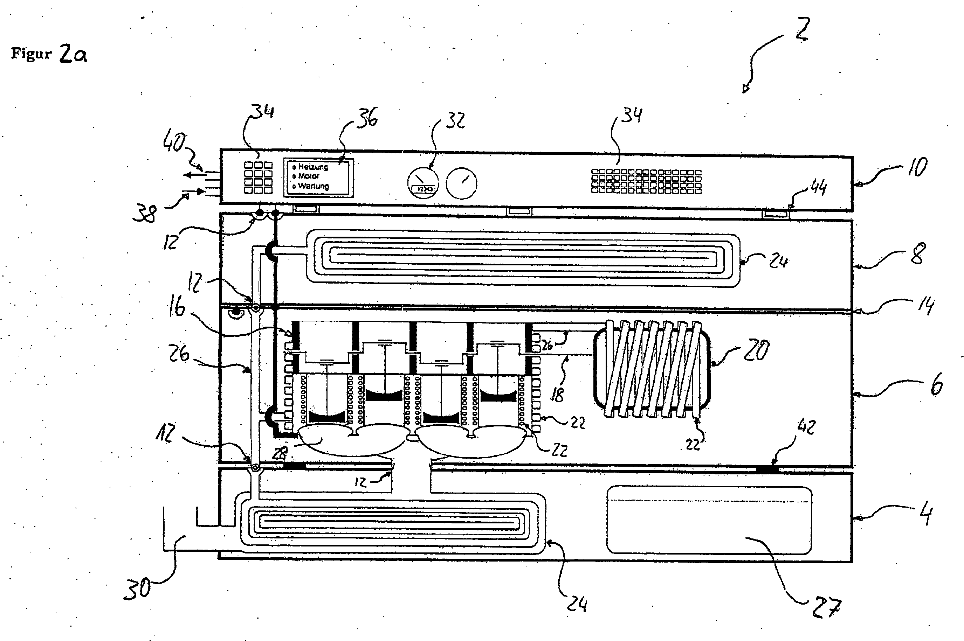

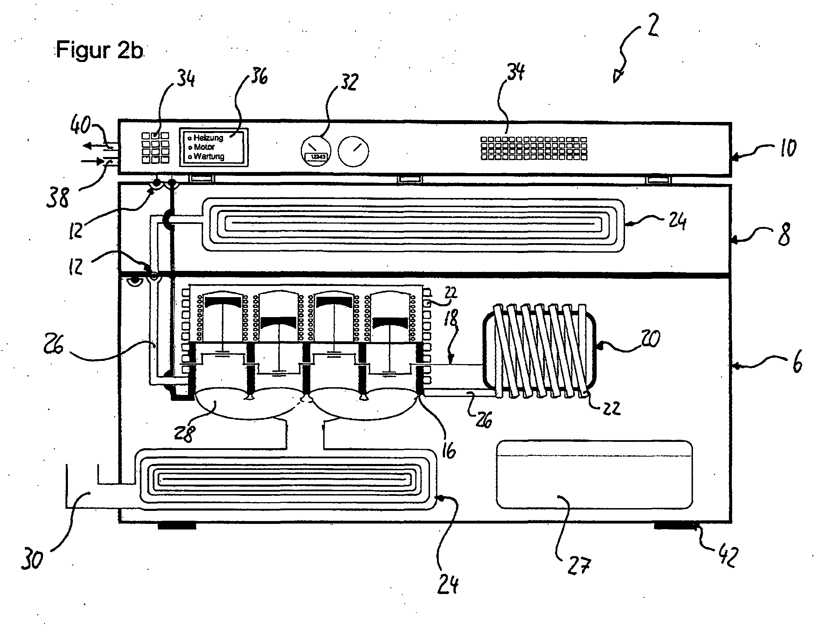

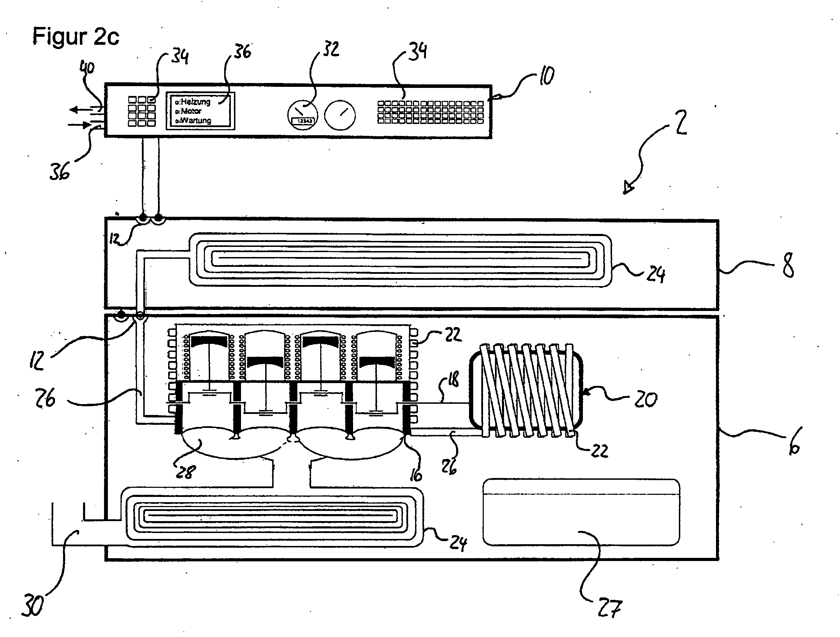

- **Figur** 2**b**: einen alternativen modularen Aufbau eines BHKWs,
- **Figur 2c**: einen weiteren alternativen Aufbau eines BHKW,

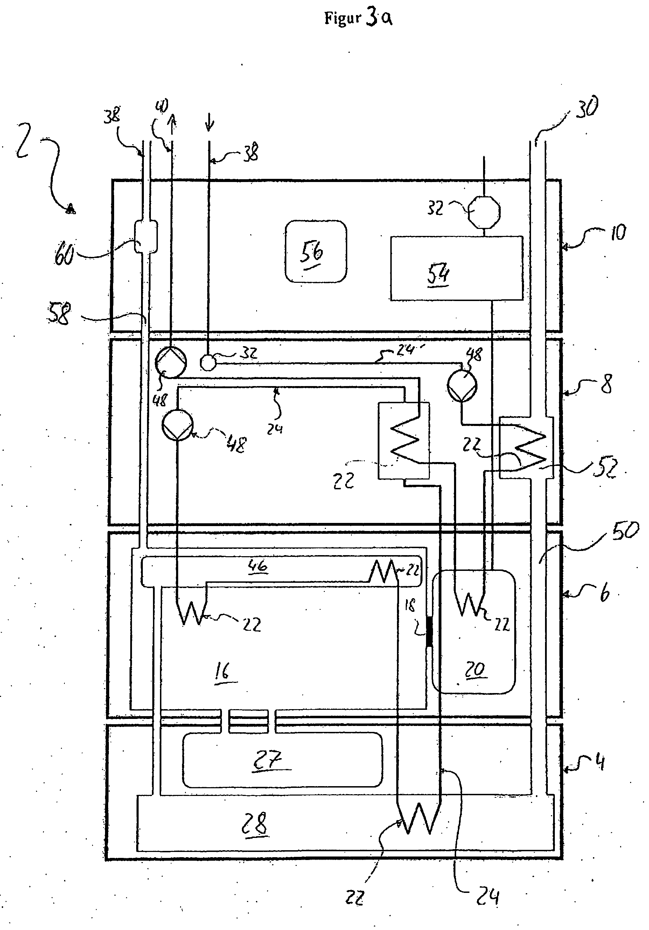

- **Figur 3a**: einen Aufbau eines erfindungsgemäßen BHKW,

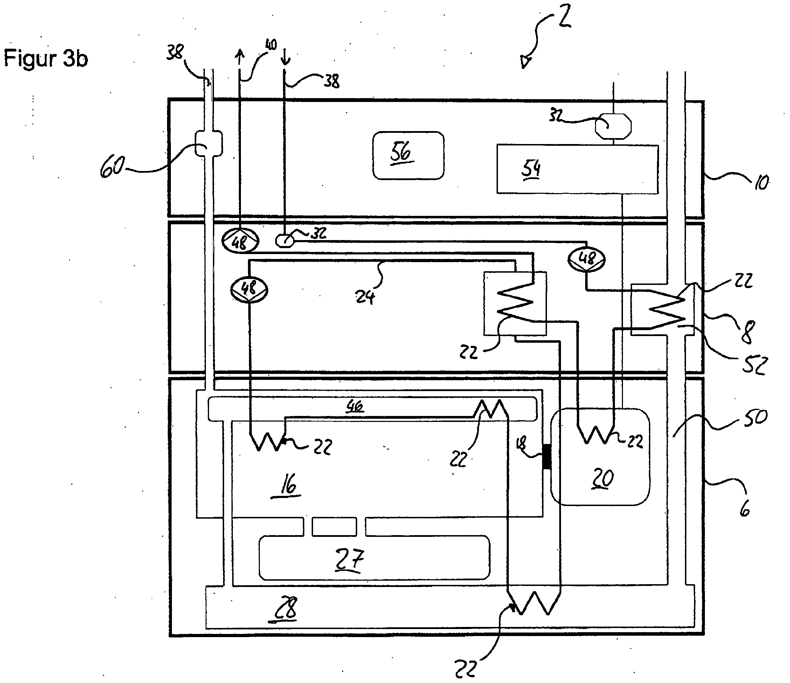

- **Figur 3b**: einen anderen Aufbau eines BHKW und

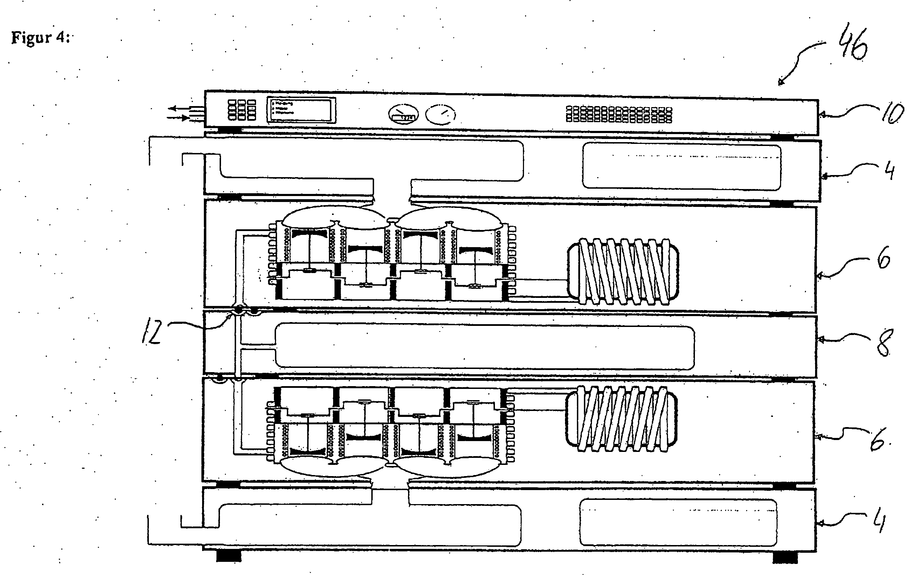

- **Figur 4**: ein System aus Modulen.

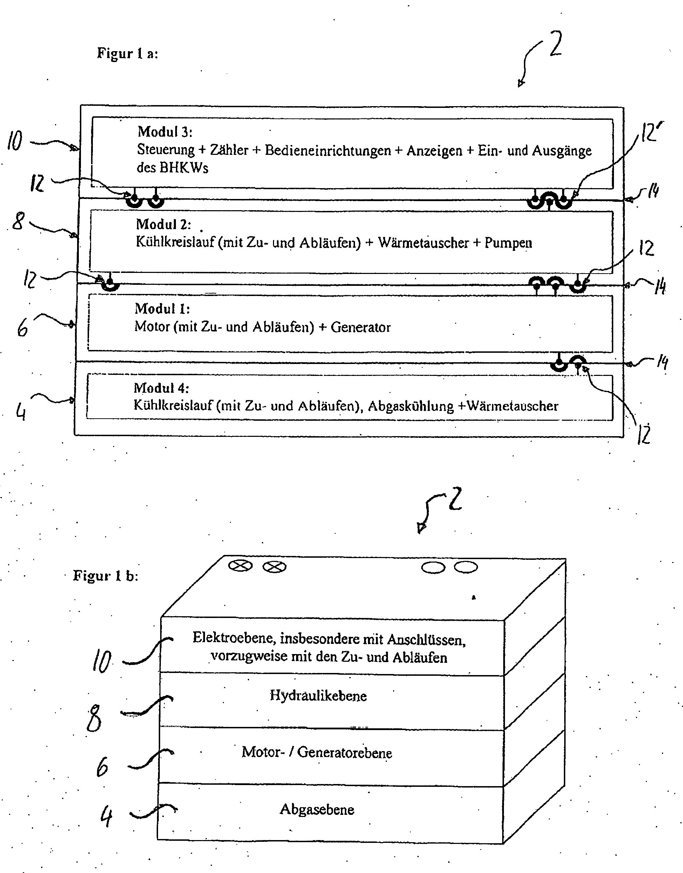

Die **Figur 1a** zeigt einen schematischen Aufbau eines erfindungsgemäßen modularen BHKW (2). Als unterstehendes Modul ist ein viertes Modul (4) angeordnet, das den mindestens einen Kühlkreislauf aufweist. Dieser Kühlkreislauf kann insbesondere Zu- und Abläufe aufweisen, mit denen das Modul vorzugsweise mit einem anderen Modul verbindbar ist. Des Weiteren weist das vierte Modul (4) in dem schematischen Aufbau der Figur 1 einen Wärmetauscher, sowie einen Öltank (27), insbesondere einen Öl-Vorratstank auf, der mittels Verbindungselementen, insbesondere Zu- und Abläufen, mit dem Verbrennungsmotor eines ersten Moduls (6) verbindbar ist. Das vierte Modul ist mit den erfindungsgemäßen Verbindungselementen (12), insbesondere bidirektional, mit dem ersten Modul (6) verbunden.

Das erste Modul (6) weist den mindestens einen Verbrennungsmotor auf. Der Verbrennungsmotor kann über Zu- und Abläufe verfügen, insbesondere über eine Zuführung von Brennstoff, vorzugsweise Erdgas, und eine Abführung von Abgas. Gemäß der Erfindung weist das erste Modul (6) einen Generator auf. Das erste Modul (6) weist Verbindungselemente (12) zu einem vierten Modul (4) und zu einem zweiten Modul (8) auf.

Das zweite Modul (8) weist den mindestens einen Kühlkreislauf auf, vorzugsweise mit Zu- und Abläufen. Des Weiteren weist das zweite Modul (8) in dem schematischen Aufbau der Figur 1 einen Wärmetauscher und Pumpen, insbesondere für den Kühlkreislauf auf. Das zweite Modul (8) weist Verbindungselemente auf, mit denen es an andere·Module, insbesondere an ein erstes Modul (6) und/oder an ein drittes Modul (10) angeschlossen ist.

Ein drittes Modul (10) weist mindestens eine Steuerung, einen Zähler, Bedieneinrichtungen und Anzeigen auf sowie insbesondere Ein- und Ausgänge des Blockheizkraftwerks.

Die Kontaktflächen (14) der Module sind so ausgestaltet, dass die Module aufeinander lagern und/oder ineinander fassen. Die Kontaktflächen weisen die Verbindungselemente (12) auf, insbesondere Steckverbinder und/oder Kupplungselemente, wie Multikupplungen (12').

Die **Figur 1b** zeigt eine schematische Gliederung eines erfindungsgemäßen modularen BHKW. Das modulare BHKW ist dabei, wie auch in der Figur 1a, zusammengesetzt aus einem ersten Modul (6), einem zweiten Modul (8), einem dritten Modul (10) und einem vierten Modul (4). Gleichzeitig kann das BHKW durch den erfindungsgemäßen modularen Aufbau in unterschiedliche Bereiche gegliedert werden. So bildet das erste Modul (6) eine Motor-/ Generatorebene, auf der der Verbrennungsmotor und der Generator lokalisiert ist. In einer darüber befindlichen Ebene, der Hydraulikebene, insbesondere gebildet durch ein zweites Modul (8), befinden sich Elemente des mindestens einen Kühlkreislaufes. In der obersten Ebene des BHKW, der Elektroebene, können sich insbesondere auch die Anschlüsse und/oder die Zu- und Abläufe des BHKW, vorzugsweise alle Anschlüsse und/oder Zu- und Abläufe des BHKW, befinden. Die oberste Ebenen des erfindungsgemäßen modularen BHKW wird insbesondere gebildet aus einem dritten Modul (10). In der Figur 1b ist des Weiteren eine untere Ebene, insbesondere gebildet aus einem vierten Modul (4), abgebildet. Die untere Ebene, die Abgasebene, kann insbesondere Elemente einer Abgasanlage aufweisen und Teile des mindestens einen Kühlkreislaufes. Die untere Ebene des modularen BHKW wird insbesondere durch ein viertes Modul (4) gebildet.

Die **Figur 2a** zeigt einen modularen Aufbau eines erfindungsgemäßen modularen BHKW (2). Das modulare BHKW ist dabei zusammengesetzt aus einem ersten Modul (6), einem zweiten Modul (8), einem dritten Modul (10) und einem vierten Modul (4), wobei die jeweiligen Module (4, 6, 8, 10) mittels Verbindungselementen (12) verbunden sind. Das erste Modul (6) weist einen Verbrennungsmotor (16) auf. Der Verbrennungsmotor (16) ist über eine Welle (18) mit einem Generator (20) verbunden. Der Generator (20) wandelt dabei mechanische Bewegungsenergie, insbesondere die im Verbrennungsmotor (16) produzierte Drehbewegung der Welle (18) um. Der Verbrennungsmotor (16) weist in der Figur 2 Elemente zur Wärmeübertragung (22) auf, die mit dem mindestens einen Kühlkreislauf (24) sind. Auch ist der Generator über eine hydraulische Verbindung (26), vorzugsweise einen Panzerschlauch, an dem mindestens einen Kühlkreislauf (24) angeschlossen. Der Generator weist, ebenfalls Elemente zur Wärmeübertragung (22) auf, die mit dem mindestens einen Kühlkreislaufs (24) verbunden sind.

Der Verbrennungsmotor (16) weist Elemente einer Abgasanlage (28) auf, die mit dem mindestens einen Kühlkreislauf (24), insbesondere mit dem Kühlkreislauf des vierten Moduls verbunden sind.

Die Verbrennungsgase des Motors, können, insbesondere nach deren Abkühlung über einen Abgasstutzen (30) einem externen Abluftsystem, insbesondere einem Schornstein (nicht abgebildet), zugeführt werden.

Die während des Betriebes des BHKW entstehende Abwärme des Motors kann durch die Elemente zur Wärmeübertragung (22) auf den mindestens einen Kühlkreislauf (24) übertragen werden. Über eine hydraulische Verbindung (26), insbesondere über einen Panzerschlauch, ist das erste Modul (6) mittels Verbindungselementen (12) an das zweite Modul (8) angeschlossen.

Das zweite Modul (8) weist den mindestens einen Kühlkreislauf (24) auf, der die Abwärme des Verbrennungsmotors (16) über ein, insbesondere fluides, Kühlmittel, vorzugsweise Wasser, abführt. Das erwärmte Kühlmittel wird einem dritten Modul (10) zugeführt, insbesondere über ein hydraulisches Verbindungselement (12).

Das dritte Modul (10) weist Mittel zu Messen und Zähler (32) auf, die vorzugsweise den Brennstoff-Verbrauch und die produzierte und/oder abgeleitete Wärmemenge messen. Diese Zähler (32) können sowohl analog als auch digital ausgeführt sein. Des Weiteren weist das dritte Modul (10) mindestens eine Steuerung auf, insbesondere eine Steuerung für mindestens eines der Bauteile, insbesondere des Motors und/oder des Generators, oder einzelner Module und/oder des gesamten modularen BHKW und/oder einer angeschlossenen Heizungsanlage. Diese Steuerung kann über Bedienelemente (34) eingestellt werden. Auch kann das dritte Modul (10) mehrere Bedienelemente (34) aufweisen. Vorzugsweise weist das dritte Modul (10) mindestens eine Anzeige (36) auf, die vorzugsweise berührungssensitive Bereiche, insbesondere ein Touch-Pad, aufweist. In einer bevorzugten Ausführungsform weist das dritte Modul mindestens einen Zulauf (38), insbesondere für den Brennstoff des Motors (16), und/oder einen Ablauf (40), insbesondere für das erwärmte Kühlmittel, vorzugsweise Wasser, auf.

Dabei sind die Kontaktflächen (14) zwischen den Modulen (4, 6, 8, 10). so ausgestaltet, dass die Module übereinander positioniert werden und/oder ineinander fassen. Die erfindungsgemäßen Module (4, 6, 8, 10) können Aufstellprofile (42, 44), insbesondere Standfüße (42) und/oder Lagerungsschienen (44), aufweisen. Die Module der Figur 2 sind jeweils an ein direkt benachbartes Anschlussmodul mittels eines komplementären Verbindungselements (12) angeschlossen.

Die **Figur 2b** zeigt einen modularen Aufbau eines modularen BHKW (2). Abweichend zur Figur 2a, besteht dieses modulare BHKW aus einem ersten Modul, welches auch Elemente einer Abgasanlage (28) und Elemente des mindestens einen Kühlkreislaufs aufweist, und einem zweiten Modul.

Die **Figur 2c** zeigt einen alternativen Aufbau eines modularen BHKW(2). Abweichend zu den Figuren 2a und 2b ist die Steuerung für mindestens eines der Bauteile örtlich von dem ersten und zweiten Modul entfernt.

Die **Figur 3a** zeigt einen bevorzugten Aufbau eines modularen BHKW (2). Das modulare BHKW ist ebenfalls zusammengesetzt aus einem ersten Modul (6), einem zweiten Modul (8), einem dritten Modul (10) und einem vierten Modul (4).

Das erste Modul (6) enthält neben dem Verbrennungsmotor (16) einen Generator (20). Beide Bauteile sind über mindestens eine Welle (18) verbunden. Der Verbrennungsmotor weist mit mindestens ein Wärme-übertragenes Element (22) und einen Abgaskrümmer (46) mit einem wärmeübertragenen Element (22) auf. Diese wärmeübertragenen Elemente sind jeweils mit dem mindestens einen Kühlkreislauf (24) verbunden, vorzugsweise mit genau einem Kühlkreislauf, insbesondere mit einem Primärkühlkreislauf. Der Kühlkreislauf kann über mindestens eine Pumpe (48) verfügen. Der Verbrennungsmotor (16) ist außerdem über mindestens eine Zuleitung und mindestens eine Ablejtung mit einem Öltank und/oder einer Ölreservoirerweiterung (27) verbunden. Der Öltank (27) und/oder die Ölreservoirerweiterung (27) ist vorzugsweise im vierten Modul untergebracht. Im vierten Modul ist ebenfalls eine Abgasanlage (28), insbesondere mit einem Abgasschaldämpfer und einem Wärmetauscher (22) untergebracht sein. Die Abgasanlage (28) ist vorzugsweise mit einer Abgasstrecke (50) verbunden, die insbesondere durch alle vier Module (4, 6, 8, 10) verläuft. In einer besonders bevorzugten Ausführungsform befindet sich in dem zweiten Modul ein zusätzlicher Wärmeübertrager (22), insbesondere ein Brennwertwärmetauscher, der vorzugsweise die Abwärme des Abgases mittels eines Rohrbündelwärmeübertragers (52) an den mindestens einen Kühlkreislauf (24), besonders bevorzugt einen zweiten Kühlkreislauf, insbesondere einem Sekundärkühlkreislauf (24') überträgt. Dieser Kühlkreislauf, vorzugsweise der Sekundärkühlkreislauf, verfügt ebenfalls über mindestens eine Pumpe (48), vorzugsweise mindestens zwei Pumpen. Auch kann. der mindestens eine Kühlkreislauf mindestens einen Zähler (32), vorzugsweise mindestens einen Wärmemengenzähler aufweisen.

Das dritte Modul (10) weist in der Figur 3 mindestens eine Steuerungseinheit (54) auf, die vorzugsweise mit einem Kommunikationselement (56) verbunden ist. Das Kommunikationselement (56) kann insbesondere einen Sender und Empfänger für einen Datenaustausch aufweisen. Das dritte Modul kann außerdem mindestens einen Zähler (32) aufweisen. Auch kann beispielsweise die Gasstrecke (58) über Regelelemente (60) und/oder Zähler verfügen. Das dritte Modul weist vorzugsweise alle Zuflüsse (38) und/oder Abflüsse (40) und/oder Anschlüsse, insbesondere mindestens einen Anschluss an eine Niederspannungsnetz (62) oder an einen Kamin über eine Abgasstutzen (30), auf.

Das dritte Modul kann insbesondere mindestes einen Zulauf (38), für ein anschließbares Heizungsnetz aufweisen und/oder einen Zulauf (38), vorzugsweise einen zweiten Zulauf, für einen Trinkwasseranschluss aufweisen. Vorzugsweise verfügt der mindestens eine Kühlkreislauf, insbesondere jeder Kreislauf, vorzugsweise der Kühlkreislauf, der an den Trinkwasseranschluss oder der den Heizungsanschluss angeschlossen ist, jeweils auch über einen Abfluss (40), über den insbesondere eine im BHKW aufgewärmte Flüssigkeit, vorzugsweise Heizungswasser oder Trinkwasser, in ein Verbrauchernetz eingespeist wird.

Auch verfügt das dritte Modul in einer bevorzugten Ausgestaltung über einen Gasanschluss, dass heißt einem Zulauf (38) der Gasstrecke (58).

Die **Figur 3b** ist entsprechend vergleichbar mit Figur 2b.

Die **Figur 4** zeigt ein System (46) aus BHKW Modulen (4, 6, 8, 10). Das abgebildete System weist zwei erste Module :(6) auf, die jeweils mit einem vierten Modul (4) und einem, insbesondere gemeinsamen zweiten Modul (8) verbunden sind. Zusätzlich weist das System ein drittes Modul (10) auf, das mindestens eine Steuerung enthält. Die Module (4, 6, 8, 10) sind mittels Verbindungselementen (12) miteinander verbunden.

## Patentansprüche

1. Modulares Blockheizkraftwerk (BHKW) (2), die Bauteile aufweisend:
einen Verbrennungsmotor (16),
einen elektrischen Generator (20),
eine Steuerungseinheit (54) und
mindestens einen Kühlkreislauf (24); wobei das BHKW (2) einen modularen Aufbau aufweist mit mindestens einem ersten Modul (6), einem zweiten Modul (8), einem dritten Modul (10) und einem vierten Modul (4), **dadurch gekennzeichnet, dass**
der Verbrennungsmotor (16) und der Generator (20) nur in dem ersten Modul (6) enthalten sind,
ein erster Abschnitt des mindestens einen Kühlkreislaufs (24) in dem zweiten Modul (8) enthalten ist,
die Steuerungseinheit (54) für mindestens eines der Bauteile nur in dem dritten Modul (10) enthalten ist, und
Elemente einer Abgasanlage (28) und ein zweiter Abschnitt des mindestens einen Kühlkreislauf (24) in dem vierten Modul (4) enthalten sind, wobei
der Standplatzbedarf des modularen BHKWs (2) kleiner als 4 m² ist,
die Module (4, 6, 8, 10) Kontaktflächen (14) aufweisen,
die Kontaktflächen (14) Verbindungselemente (12) aufweisen,
die Bauteile mit den Verbindungselementen (12) elektrisch und/oder hydraulisch verbindbar sind,
die Module (4, 6, 8, 10) jeweils mindestens ein zu dem direkt benachbarten Modul komplementäres Verbindungselement aufweisen,
die Verbindungselemente (12) und die komplementären Verbindungselemente schnellverbindbar sind, und wobei
Die Verbindungselemente (12) und die komplementären Verbindungselemente elektrische Steckverb inder für die Strom- oder Datenübertragung, und/oder Kupplungselement für gasförmige oder fluide Medien unfassen.

2. Modulares BHKW (2) nach einem der vorhergehenden Ansprüche, **dadurch gekennzeichnet, dass** die Module (4, 6, 8, 10) jeweils Rahmen, insbesondere einen Gitterrohrrahmen, aufweisen und/oder so angepasst sind, dass sie aneinander und/oder ineinander und/oder übereinander passen, insbesondere dass ein oberes Modul auf dem Rahmen eines unteren Moduls steht, und/oder dass die Module (4, 6, 8, 10) ein Aufstellprofil, insbesondere Standfüße (42) und/oder Lagerungsschienen, aufweisen.

3. Modulares BHKW (2) nach einem der vorhergehenden Ansprüche, **dadurch gekennzeichnet, dass** das zweite Modul (8) den mindestens einen Kühlkreislauf (24) einer Kühlung des Verbrennungsmotors (16) und/oder des Generators (20) aufweist, der die Wärmeenergie des Verbrennungsmotors (16) und/oder des Generators (20) an ein anderes Modul, insbesondere an das dritte Modul (10), überträgt.

4. Modulares BHKW (2) nach einem der vorhergehenden Ansprüche, **dadurch gekennzeichnet, dass** das dritte Modul (10) die Steuerungseinheit (54) für das BHKW (2), insbesondere für die Steuerung des Verbrennungsmotors (16) und des Generators (20), aufweist und Messvorrichtungen für Eingangs- und/oder Ausgangsgrößen.

5. Modulares BHKW (2) nach einem der vorhergehenden Ansprüche, **dadurch gekennzeichnet, dass** das dritte Modul (10) mindestens eine Anzeigevorrichtung und/oder eine Bedienvorrichtung aufweist.

6. Modulares BHKW (2) nach einem der vorhergehenden Ansprüche, **dadurch gekennzeichnet, dass** das dritte Modul (10)Ein- und/oder Ausgänge, insbesondere hydraulische und/oder elektrische Ein- und/oder Ausgänge, des modularen Blockheizkraftwerks aufweist.

7. Modulares BHKW (2) nach einem der vorhergehenden Ansprüche, **dadurch gekennzeichnet, dass** das dritte Modul (10) mindestens einen Zähler (32) für die zu übertragende Energie, insbesondere für die elektrische Energie und/oder die Wärmeenergie, aufweist.

8. Modulares BHKW (2) nach einem der vorhergehenden Ansprüche, **dadurch gekennzeichnet, dass** das dritte Modul (10) mindestens einen Zähler (32) für den Verbrauch von elektrischer Energie und/oder für den zugeführten Brennstoff aufweist.

9. Modulares BHKW (2) nach einem der vorhergehenden Ansprüche, **dadurch gekennzeichnet, dass** das vierte Modul (4) die Abgasanlage des Verbrennungsmotors (16) aufweist und den mindestens einen Kühlkreislauf (24) aufweist, der insbesondere die Wärme des Abgases des Verbrennungsmotors (16) an ein anderes Modul, insbesondere an das zweite und/oder dritte Modul (8, 10) überträgt.

10. Modulares BHKW (2) nach einem der vorhergehenden Ansprüche, **dadurch gekennzeichnet, dass** das modulare BHKW (2) einen Wärmemengenzähler und/oder eine Steuerung für das BHKW (2) und/oder das gesamtes Heizungssystem, insbesondere auch eine Heizungssteuerung für mehrere optionale Heizkreise einer Elektroverteilung und/oder eine Kommunikationseinheit und/oder eine Mischergruppe für einen Heizkreis, insbesondere auch eine Mischergruppe für das Trinkwarmwasser bzw. zur vorrangigen Bedienung der Trinkwarmwasser-Bereitung, und/oder eine Speicherladepumpe und/oder eine Schaltung zur Motorvorwärmung durch Heizungswasser und/oder einen abrechnungsrelevanten Stromzähler und/oder eine Einrichtung zur Netzüberwachung mit zugeordneten Schaltorganen (ENS) aufweist.

11. Modulares BHKW (2) nach einem der Ansprüche 1 bis 10, wobei die schmellverbindbaren Verbindungselemente (12) in einanderge steckt und/ oder verschraubt, ist.

12. Modulares BHKW (2) nach Anspruch 11, **dadurch gekennzeichnet, dass** die Module (4, 6, 8, 10) mit gleichen Bauteilen, insbesondere erste Module (6) mit je einem Verbrennungsmotor (16) und je einem Generator (20) und/oder zweite Module (8) mit dem mindestens einem Kühlkreislauf (24), miteinander verbunden sind.

## Claims

1. A modular combined heat and power plant (CHP plant) (2), comprising the components:
a combustion engine (16),
an electrical generator (20),
a control unit (54) and
at least one cooling circuit (24); wherein
the CHP plant (2) is of a modular design with at least a first module (6), a second module (8), a third module (10) and a fourth module (4), **characterised in that**,
the combustion engine (16) and the generator (20) are only incorporated in the first module (6),
a first section of the at least one cooling circuit (24) is incorporated in the second module (8),
the control unit (54) for at least one of the components is only incorporated in the third module (10), and
elements of an exhaust gas system (28) and a second section of the at least one cooling circuit (24) are incorporated in the fourth module (4), wherein
the footprint of the modular CHP plant (2) is less than 4 m²,
the modules (4, 6, 8, 10) have contact surfaces (14),
the contact surfaces (14) have connecting elements (12),
the components are electrically and/or hydraulically connectable by means of the connecting elements (12),
the modules (4, 6, 8, 10) each have at least one connecting element that is complementary to the directly adjoining module,
the connecting elements (12) and the complementary connecting elements are quick connecting, and wherein
the connecting elements (12) and the complementary connecting elements comprise electrical plug-in connectors for power or data transmission and/or coupling elements for gaseous or fluid media.

2. The modular CHP plant (2) according to any of the preceding claims, **characterised in that** the modules (4, 5, 6, 8, 10) each have frames, in particular a tubular trellis frame and/or are adapted so that they fit onto each other and/or into each other and/or on top of each other, in particular that an upper module stands on the frame of a lower module, and/or that the modules (4, 6, 8, 10) have a mounting moulding, in particular supporting feet (42) and/or positioning rails (44).

3. The modular CHP plant (2) according to any of the preceding claims, **characterised in that** the second module (8) comprises the at least one cooling circuit (24) of a cooling system for the combustion engine (16) and/or the generator (20), to transfer the thermal energy from the combustion engine (16) and/or the generator (20) to another module, in particular to the third module (10).

4. The modular CHP plant (2) according to any of the preceding claims, **characterised in that** the third module (10) comprises the control unit (54) for the CHP plant (2), in particular for controlling the combustion engine (16) and the generator (20), as well as equipment for measuring input and/or output variables.

5. The modular CHP plant (2) according to any of the preceding claims, **characterised in that** the third module (10) comprises at least one display unit and/or one operating device.

6. The modular CHP plant (2) according to any of the preceding claims, **characterised in that** the third module (10) comprises inlets and outlets, in particular hydraulic and/or electrical inlets and outlets, of the modular combined heat and power plant.

7. The modular CHP plant (2) according to any of the preceding claims, **characterised in that** the third module (10) comprises at least one meter (32) for the energy being transmitted, in particular for the electrical energy and/or the thermal energy.

8. The modular CHP plant (2) according to any of the preceding claims, **characterised in that** the third module (10) comprises at least one meter (32) for electricity consumption of and/or fuel input.

9. The modular CHP plant (2) according to any of the preceding claims, **characterised in that** the fourth module (4) comprises the exhaust gas system for the combustion engine (16) and the at least one cooling circuit (24), which in particular transfers the heat from the exhaust gas from the combustion engine (16) to another module, in particular to the second and/or third module (8, 10).

10. The modular CHP plant (2) according to any of the preceding claims, **characterised in that** the modular CHP plant (2) comprises a heat meter and/or a control for the CHP plant (2) and/or the entire heating system, in particular also a heating control for a plurality of optional heating circuits of a power distribution and/or a communication unit and/or a mixing unit for a heating circuit, in particular also a mixing unit for domestic hot water and/or for the preferential operation of domestic hot water production, and/or a storage tank charging pump and/or a switch for preheating the engine with heating water and/or a billing-relevant electricity meter and/or a network monitoring system with associated switching devices (ENS).

11. The modular CHP plant (2) according to any of claims 1 to 10, wherein the quick-connectable connecting elements (12) are plugged and/or screwed into each other.

12. The modular CHP plant (2) according to claim 11, **characterised in that** the modules (4, 6, 8, 10) with the same components, in particular the first module (6) having one combustion engine (16) and one generator (20) and/or the second module (8) having the at least one cooling circuit (24), are connected to each other.

## Revendications

1. Centrale de chauffage en bloc modulaire (BHKW) (2), les composants présentant :
un moteur à combustion interne (16),
un générateur électrique (20),
une unité de commande (54) et
au moins un circuit de refroidissement (24) ; dans laquelle
la BHKW (2) présente une structure modulaire avec au moins un premier module (6), un deuxième module (8), un troisième module (10) et un quatrième module (4), **caractérisée en ce que**
le moteur à combustion interne (16) et le générateur (20) sont contenus seulement dans le premier module (6),
une première section de l'au moins un circuit de refroidissement (24) est contenu dans le deuxième module (8),
l'unité de commande (54) pour au moins un des composants est contenu seulement dans le troisième module (10), et
des éléments d'une installation de gaz d'échappement (28) et une deuxième section de l'au moins un circuit de refroidissement (24) sont contenus dans le quatrième module (4), dans laquelle
l'encombrement de la BHKW modulaire (2) est inférieur à 4 m²,
les modules (4, 6, 8, 10) présentent des surfaces de contact (14),
les surfaces de contact (14) présentent des éléments de liaison (12),
les composants avec les éléments de liaison (12) peuvent être reliés électriquement et/ou hydrauliquement,
les modules (4, 6, 8, 10) présentent respectivement au moins un élément de liaison complémentaire au module directement adjacent,
les éléments de liaison (12) et les éléments de liaison complémentaires peuvent être raccordés rapidement, et dans laquelle
les éléments de liaison (12) et les éléments de liaison complémentaires comprennent des connecteurs électriques pour la transmission de courant ou de données, et/ou des éléments de couplage pour des milieux gazeux ou fluides.

2. BHKW modulaire (2) selon l'une quelconque des revendications précédentes, **caractérisée en ce que** les modules (4, 5, 6, 8, 10) présentent respectivement des cadres, en particulier un cadre de tube en treillis, et/ou sont adaptés de sorte qu'ils sont adaptés les uns aux autres et/ou les uns dans les autres et/ou les uns sur les autres, en particulier qu'un module supérieur se trouve sur le cadre d'un module inférieur, et/ou que les modules (4, 6, 8, 10) présentent un profil de pose, en particulier des pieds d'appui (42) et/ou des rails de montage (44).

3. BHKW modulaire (2) selon l'une quelconque des revendications précédentes, **caractérisée en ce que** le deuxième module (8) présente l'au moins un circuit de refroidissement (24) d'un refroidissement du moteur à combustion interne (16) et/ou du générateur (20), qui transmet l'énergie thermique du moteur à combustion interne (16) et/ou du générateur (20) à un autre module, en particulier au troisième module (10).

4. BHKW modulaire (2) selon l'une quelconque des revendications précédentes, **caractérisée en ce que** le troisième module (10) présente l'unité de commande (54) pour la BHKW (2), en particulier pour la commande du moteur à combustion interne (16) et/ou du générateur (20), et des dispositifs de mesure pour des grandeurs d'entrée et/ou de sortie.

5. BHKW modulaire (2) selon l'une quelconque des revendications précédentes, **caractérisée en ce que** le troisième module (10) présente au moins un dispositif d'affichage et/ou un dispositif de commande.

6. BHKW modulaire (2) selon l'une quelconque des revendications précédentes, **caractérisée en ce que** le troisième module (10) présente des entrées et/ou sorties, en particulier des entrées et/ou sorties hydrauliques et/ou électriques, de la centrale de chauffage en bloc modulaire.

7. BHKW modulaire (2) selon l'une quelconque des revendications précédentes, **caractérisée en ce que** le troisième module (10) présente au moins un compteur (32) pour l'énergie à transmettre, en particulier pour l'énergie électrique et/ou l'énergie thermique.

8. BHKW modulaire (2) selon l'une quelconque des revendications précédentes, **caractérisée en ce que** le troisième module (10) présente au moins un compteur (32) pour la consommation d'énergie électrique et/ou pour le combustible amené.

9. BHKW modulaire (2) selon l'une quelconque des revendications précédentes, **caractérisée en ce que** le quatrième module (4) présente l'installation de gaz d'échappement du moteur à combustion interne (16) et présente l'au moins un circuit de refroidissement (24), qui transmet en particulier la chaleur des gaz d'échappement du moteur à combustion interne (16) à un autre module, en particulier au deuxième et/ou troisième module (8, 10).

10. BHKW modulaire (2) selon l'une quelconque des revendications précédentes, **caractérisée en ce que** la BHKW modulaire (2) présente un compteur de quantité de chaleur et/ou une commande pour la BHKW (2) et/ou l'ensemble du système de chauffage, en particulier aussi une commande de chauffage pour plusieurs circuits de chauffage optionnels d'une distribution électrique et/ou une unité de communication et/ou groupe de mélangeur pour un circuit de chauffage, en particulier aussi un groupe de mélangeur pour l'eau chaude potable ou pour la commande prioritaire de la production d'eau chaude potable, et/ou une pompe de charge du ballon et/ou une commutation pour le préchauffage de moteur par eau de chauffage et/ou un compteur électrique de facturation et/ou un dispositif pour la surveillance du réseau avec des organes de commutation associés (ENS).

11. BHKW modulaire (2) selon l'une quelconque des revendications 1 à 10, dans laquelle les éléments de liaison pouvant être raccordés rapidement (12) est enfiché l'un dans l'autre et/ou vissé.

12. BHKW modulaire (2) selon la revendication 11, **caractérisée en ce que** les modules (4, 6, 8, 10) avec les mêmes composants, en particulier premiers modules (6) avec respectivement un moteur à combustion interne (16) et respectivement un générateur (20) et/ou deuxièmes modules (8) avec l'au moins un circuit de refroidissement (24) sont reliés les uns aux autres.
